# EUROPEAN PATENT APPLICATION

(11) **EP 4 080 714 A1**
(43) Date of publication of application: **26.10.2022**
(21) Application number: 21184930.2
(22) Date of filing: 11.07.2021
(51) Int. Cl.: H02J 7/00

(54) **CHARGING CABINET SYSTEM AND METHOD OF MANAGING AND USING THE SAME**

(30) Priority: 21.04.2021 CN 202110430296
(71) Applicant: Jinyun Reypu Electronic Technology CO., LTD., 321403 Lishui City Zhejiang (CN); Zhejiang Okai Vehicle Co., Ltd., 321403 Lishui City Zhejiang (CN); Hangzhou Yele Technology Co., Ltd., 310000 Hangzhou Zhejiang (CN)
(72) Inventor: Lu, Jiangtao, Lishui City, 321403 (CN); Yi, Dongdong, Lishui City, 321403 (CN); Tang, Wei, Hangzhou, 310000 (CN); Du, Songxian, Lishui City, 321403 (CN); Liu, Dejun, Lishui City, 321403 (CN); Cao, Yang, Lishui City, 321403 (CN); Li, Guanglu, Lishui City, 321403 (CN); Chen, Cheng, Lishui City, 321403 (CN)
(74) Representative: Loo, Chi Ching

(57) **Abstract**

A charging cabinet system includes a power supply system, a controlling and displaying system, and a plurality of charging compartments. The power supply system is connected with the controlling and displaying system. The charging compartment is connected with both the power supply system and the controlling and displaying system. The charging compartment includes: a charging module for charging a low-power battery; a driving module for moving the battery out of the charging compartment or moving the battery into the charging compartment; a detection module for detecting whether a fully charged battery is picked by a user after being moved out of the charging compartment for a period of time; and a controller connected with the charging module, the driving module and the detection module, and connected with the controlling and displaying system. The technical effect of the disclosure is that it can effectively prevent the battery from being lost.

## Description

### TECHNICLAL FIELD

The disclosure relates to a technical field of charging device, in particular to a charging cabinet system and a method of managing and using the same.

### BACKGROUND ART

A charging cabinet is a kind of intelligent device placed in public places, and a user can put a battery with insufficient power into the charging cabinet first, then make a payment by scanning a two-dimensional code and get a battery with sufficient power, which can completely realize the self-service and intelligence.

Generally, the charging cabinet contains multiple charging compartments which are configured to charge batteries; however, the charging compartments of the charging cabinet are of open structures, resulting in a loss of the batteries.

A charging control method of a shared rechargeable battery cabinet and a shared rechargeable battery cabinet are disclosed in Chinese invention patent No. CN108922051A published on Nov, 30, 2018, which dually protect the battery with a rechargeable battery compartment door lock and a battery lock to prevent the battery from being lost, but with a disadvantage that when the rechargeable battery compartment door and battery lock are both opened, the battery still can be lost if no user picks it.

### SUMMARY

### 1. Problems to be solved

In view of a technical problem that a battery in a charging compartment of charging cabinet is easy to lose, the disclosure provides a charging cabinet system and a method of managing and using the same, which can effectively prevent the battery from be lost.

### 2. Solution

To solve the above problems, the technical scheme provided in the disclosure is as follows:
A charging cabinet system includes a power supply system, a controlling and displaying system and a plurality of charging compartments. The power supply system is connected with the controlling and displaying system. The charging compartment is connected with both the power supply system and the controlling and displaying system. The charging compartment includes:
a charging module for charging a low-power battery;
a driving module for moving a battery out of or into the charging compartment;
a detection module for detecting whether a fully charged battery is picked by a user after being moved out of the charging compartment for a period of time, if the fully charged battery is not picked, the driving module moving the fully charged battery into the charging compartment, and if the fully charged battery is picked, the controlling and displaying system prompting that the charging compartment is an empty charging compartment;
a controller connected with the charging module, the driving module and the detection module, and connected with the controlling and displaying system; and
a communication module for realizing a mutual signal transmission among the controller, the charging module, the driving module and the detection module.

Optionally, the charging compartment further includes a limiting module for limiting a driving stroke of the driving module. The limiting module is connected with the controller.

Optionally, the charging compartment further includes an identification module. The identification module is configured for identifying information about the low-power battery and judging whether the low-power battery is matched, and the identification module is connected with the controller.

Optionally, the charging compartment further includes a locking module. The locking module is configured for locking the low-power battery or locking the fully charged battery, and the locking module is electrically connected with the controller.

Optionally, the power system includes a power input end, a power conversion module and a power output end. The power input end is connected with an alternating current.

The power conversion module is connected with both the power input end and the power output end, and is configured for obtaining a specific power signal.

Optionally, the power conversion module comprises a power adapter and a filter.

The power adapter is connected with the power input end and the power output end, and is configured for obtaining a power signal with a specific voltage.

The filter, the power input end and the power output end are configured for obtaining a power signal with a specific frequency.

Optionally, the controlling and displaying system includes a main controller, a display screen and a speaker. The main controller is connected with both the display screen and the speaker. The main controller is connected with a controller of the charging compartment, and the power supply system is connected with the main controller, the display screen and the speaker.

Optionally, the controlling and displaying system includes a main controller and a display screen. The main controller is connected with the display screen. The main controller is connected with a controller of the charging compartment, and the power supply system is connected with both the main controller and the display screen.

Optionally, the charging cabinet system further includes a communication system. The communication system is connected with the main controller and configured for transmitting information of the charging cabinet to a remote server, and the communication system is a network wire or a wireless signal transceiver.

Optionally, the charging cabinet also includes a smoke detection and alarm system which is connected with the controller.

A method of managing and using a charging cabinet system includes following steps S1 to S3.

In S1, a user scans a two-dimensional code on a display screen, a main controller prompts the user to put a low-power battery into an empty charging compartment, and an identification module judges whether the low-power battery is matched; if the low-power battery is matched, the low-power battery is electrically connected with a charging module, and a locking module is triggered to lock the low-power battery and a normal charging is started until the charging is complete; if the low-power battery is not matched, a driving module moves the low-power battery out of the charging compartment, and a limiting module is triggered during the driving process to limit a driving stroke of the driving module.

In S2, after the low-power battery starts to be charged normally, the driving module of the charging compartment with the full-power battery drives the full-power battery to move out of the charging compartment for the user's picking, and the limiting module is triggered during the driving process to limit the driving stroke of the driving module.

In S3, after a period of time, the detection module detects whether the fully charged battery is picked by the user after being moved out of the charging compartment for a period of time; if the fully charged battery is not picked, the driving module moves the fully charged battery into the charging compartment, the limiting module is triggered during the driving process to limit the driving stroke of the driving module, and the locking module is triggered to lock the fully charged battery; if the fully charged battery is picked by the user, the controller prompts that the charging compartment is an empty charging compartment.

### 3. Beneficial effects

Compared with the prior art, the technical scheme provided in the disclosure has the following beneficial effects that it can be effectively prevented from being lost.

### BRIEF DESCRIPTION OF THE DRAWINGS

Fig.1 is a schematic diagram of a charging cabinet system according to an embodiment of the present disclosure; and
Fig. 2 is a schematic diagram of a method of managing and using a charging cabinet system according to an embodiment of the present disclosure.

In the drawings: 1. Power Supply System; 11. Power Input End; 12. Power Conversion Module; 121. Power Adapter; 122. Filter; 13. Power Output End; 2. Controlling and displaying system; 21. Main Controller; 22. Display Screen; 23. Speaker; 3. Charging Compartment; 31. Charging Module; 32. Driving Module; 33. Detection Module; 34. Controller; 35. Limiting Module; 36. Identification Module; 37. Locking Module; 38. Communication Module; 4. Communication System; 5. Remote Server; 6. Smoke Detection and Alarm System.

### DETAILED DESCRIPTION

In order to further understand contents of the present disclosure, the present disclosure will be described in detail with reference to drawings and examples.

The application will be further described in detail with reference to the drawings and embodiments. It can be understood that the specific embodiments described herein are only intended to explain related disclosures, but not to limit the disclosure. In addition, it should also be noted that for convenience of description, only the parts related to the disclosure are shown in the drawings. Terms such as "first" and "second" mentioned in the present disclosure are provided for the convenience of describing the technical scheme of the present disclosure, have no specific limiting function, are all general terms and do not constitute a limiting for the technical scheme of the present disclosure. It should be noted that the embodiments in the present application and the characteristics in the embodiments can be combined mutually in the case of no conflict. In the description of the present invention, it should be understood that the terms "center", "upper", "lower", "left", "right", "vertical", "horizontal", "inner" and "outer" which indicate an orientation or positional relationship are based on the orientation or positional relationship shown in the drawings, and are merely for convenience of describing the present invention and simplifying the description, rather than indicate or imply that the device or element referred to must have a specific orientation, be configured and operated in a specific orientation, and thus cannot be understood as a limitation on the present invention. In addition, the terms "first", "second" and "third" are only configured for descriptive purposes and cannot be understood as indicating or implying a relative importance. Unless otherwise specified and limited, the terms "installing", "coupling" and "connecting" should be understood in a broad sense, for example, it can be "fixedly connecting", or "detachably connecting" or "integrally connecting", or it can be "mechanically connecting" or "electrically connecting", or it can be "directly connecting" or "indirectly connecting through an intermediate medium", or it can be "communicating within two elements". For a person of ordinary skill in the art, specific meanings of the above terms in the present disclosure can be understood according to specific situations.

### Embodiment 1

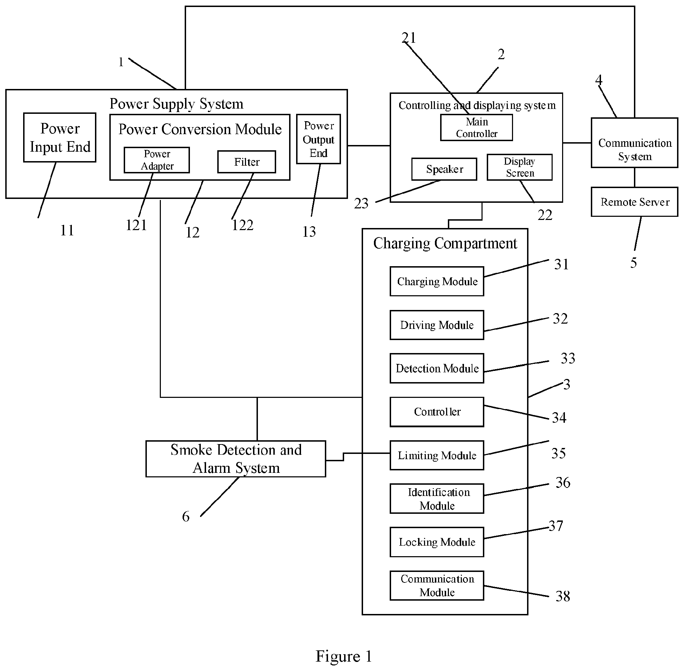

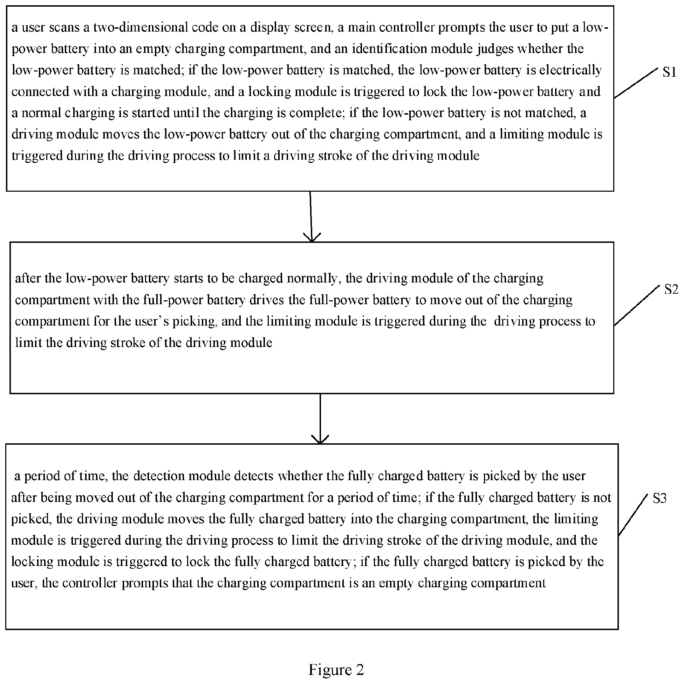

With reference to Figs. 1-2, the present disclosure provides a charging cabinet system, which includes a power supply system 1, a controlling and displaying system 2 and a plurality of charging compartments 3. The power supply system 1 is connected with the controlling and displaying system 2. The charging compartment 3 is connected with both the power supply system 1 and the controlling and displaying system 2. The charging compartment 3 includes:
a charging module 31 for charging a low-power battery;
a driving module 32 for moving a battery out of or into the charging compartment 3;
a detection module 33 for detecting whether a fully charged battery is picked by a user after being moved out of the charging compartment 3 for a period of time, if the fully charged battery is not picked, the driving module 32 moving the fully charged battery into the charging compartment 3, and if the fully charged battery is picked, the controlling and displaying system prompting that the charging compartment 3 is an empty charging compartment 3;
a controller 34 connected with the charging module 31, the driving module 32 and the detection module 33, and connected with the controlling and displaying system 2; and
a communication module 38 for realize a mutual signal transmission among the controller 34, the charging module 31, the driving module 32 and the detection module 33.

Specifically, when the battery needs to be replaced, firstly, the user scans the two-dimensional code on the controlling and displaying system 2; the controlling and displaying system 2 prompts to put the low-state battery to be replaced into an empty charging compartment 3, the low-state battery is electrically connected with the charging module 31 which then starts charging the low-state battery until the low-state battery is completely charged to be a fully-charged battery; and the charging module 31 transmits a signal to the controller 34 and the controller 34 controls the charging module 31 to disconnect from the fully-charged battery.

When the low-state battery starts to be charged normally, the controller 34 transmits a signal to the controlling and displaying system 2, and the controlling and displaying system 2 controls the display system 2 to transmit a signal to the controller 34 of the charging compartment 3 with a full-state battery; the controller 34 controls the driving module 32 to move the full-state battery out of the charging compartment 3, so that users can save time and effort in picking the full-state battery; the detection module 33 is configured for detecting whether the fully charged battery is picked by a user after being moved out of the charging compartment 3 for a period of time, if the fully charged battery is not picked, the detection module 33 transmits a signal to the controller 34, and the controller 34 transmits a signal to the driving module 32 to move the fully charged battery into the charging compartment 3 so as to prevent the fully charged battery from being lost and effectively protect the fully charged battery; if the fully charged battery is picked, the detection module 33 transmits a signal to the controller 34, and the controller 34 transmits a signal to the controlling and displaying system 2 to prompt that the charging compartment 3 is empty.

The power supply system 1 provides electrical energy for the controlling and displaying system 2 and a plurality of charging compartments 3.

Specifically, the charging compartment 3 further includes a limiting module 35 for limiting a driving stroke of the driving module 32. The limiting module 35 is connected with the controller 34.

In a process of moving the fully charged battery by the driving module 32 out of the charging compartment 3, the limiting module 35 is triggered so that the limiting module 35 transmits a signal to the controller 34, and the controller 34 controls the driving module 32 to stop driving to prevent the fully charged battery from falling out of the charging compartment 3 and causing damage to the fully charged battery; and in a process of moving the fully charged battery by the driving module 32 into the charging compartment 3, the limiting module 35 is triggered so that the limiting module 35 transmits a signal to the controller 34, and the controller 34 controls the driving module 32 to stop driving so as to prevent the driving module 32 from reciprocating for a long distance and resulting in a failure of the driving module 32. The communication module 38 is configured for realizing a mutual signal transmission between the controller 34 and the limiting module 35.

Specifically, the charging compartment 3 further includes an identification module 36. The identification module 36 is configured for identifying information about the low-power battery and judging whether the low-power battery are matched, and the identification module 36 is connected with the controller 34.

If the identification module 36 judges that the low-power battery is not matched, the identification module 36 transmits a signal to the controller 34, and the controller 34 controls the driving module 32 to move the low-power battery out of the charging compartment 3 and triggers the limiting module 35 to transmit a signal to the controller 34, and the controller 34 controls the driving module 32 to stop driving to prevent the low-power battery from falling out of the charging compartment 3 and causing damage to the low-power battery; if the identification module 36 judges that the low-power battery is matched, the low-state battery is electrically connected with the charging module 31 which then starts charging the low-state battery until the low-state battery is completely charged to be a fully-charged battery; and the charging module 31 transmits a signal to the controller 34 and the controller 34 controls the charging module 31 to disconnect from the fully-charged battery. The communication module 38 is configured for realizing a mutual signal transmission between the controller 34 and the identification module 36.

Specifically, the charging compartment 3 further includes a locking module 37. The locking module 37 is configured for locking the low-power battery or locking the fully charged battery, and the locking module 37 is electrically connected with the controller 34.

During a cooperating of the low-power battery and the charging module 31, the low-power battery triggers the locking module 37 which transmits a signal to the controller 34, and the controller 34 controls the locking module 37 to lock the low-power battery to prevent the low-power battery from be lost; in a process that the fully charged battery is returned to the charging compartment 3, the fully charged battery triggers the locking module 37 which transmits a signal to the controller 34, and the controller 34 controls the locking module 37 to lock the fully charged battery to prevent it from being lost. The communication module 38 is configured for realizing a mutual signal transmission between the controller 34 and the locking module 37.

Specifically, the power system 1 includes a power input end 11, a power conversion module 12 and a power output end 13. The power input end 11 is connected with an alternating current.

The power conversion module 12 is connected with both the power input end 11 and the power output end 13, and is configured for obtaining a specific power signal.

An alternating current is converted into a specific power signal through the power input end 11, the power conversion module 12 and the power output end 13 sequentially, so as to meet power demands of the controlling and displaying system 2 and the plurality of charging compartments 3.

Specifically, the power conversion module 12 includes a power adapter 121 and a filter 122.

The power adapter 121 is connected with both the power input end 11 and the power output end 13, and is configured for obtaining a specific power signal.

The filter 122, the power input end 11 and the power output end 13 are configured for obtaining a power signal with a specific frequency.

The power adapter 121 converts the alternating current into a power signal with a specific voltage to meet the power demands of the controlling and displaying system 2 and the plurality of charging compartments 3; the filter 122 is configured for obtaining a power signal with a specific frequency, which can prevent interferences from entering the charging cabinet system and affecting the charging cabinet system, and can also prevent electromagnetic interferences generated by the charging cabinet system from passing through.

Specifically, the controlling and displaying system 2 includes a main controller 21, a display screen 22 and a speaker 23. The main controller 21 is connected with both the display screen 22 and the speaker 23. The main controller 21 is connected with the controller 34 of the charging compartment 3, and the power supply system 1 is connected with the main controller 21, the display screen 22 and the speaker 23.

The display screen 22 is configured for displaying the two-dimensional code, and the user scans the two-dimensional code, and the main controller 21 obtains a signal and transmits the signal to the controller 34, so that the user can start charging the low-power battery. The power supply system 1 provides power for the main controller 21, the display screen 22, the speaker 23 and the charging compartment 3. The speaker 23 enables the charging cabinet system to have a voice broadcasting function.

Specifically, the charging cabinet system further includes a communication system 4. The communication system 4 is connected with the main controller 21 and configured for transmitting information of the charging cabinet to a remote server 5.

The controller 34 transmits real-time information of each charging compartment 3 to the main controller 21, and the main controller 21 transmits the real-time information of each charging compartment 3 to the remote server 5 through the communication system 4 to realize a remote real-time monitoring; the remote server 5 transmits a control signal to the main controller 21 through the communication system 4, and the main controller 21 transmits the control signal to the controller 34, and the controller 34 transmits the control signal to the charging compartment 3 to realize a remote control.

Specifically, the communication system 4 is a network wire or a wireless signal transceiver. The network wire presents a stable signal; and the wireless signal transceiver is easy to be installed.

Specifically, the charging cabinet also includes a smoke detection and alarm system 6 which is connected with the controller 34. When the charging cabinet system catches fire and produces smoke, the smoke detection and alarm system 6 transmits a signal to the controller 34, and the controller 34 controls the power supply system 1 to stop supplying power and transmits the signal to the main controller 21, and the main controller 21 controls an alarm to effectively limit spreading of the fire and minimize damages.

The disclosure also provides a method of managing and using a charging cabinet system including S1 to S3.

In S1, a user scans a two-dimensional code on a display screen 22, a main controller 21 prompts the user to put a low-power battery into an empty charging compartment 3, and an identification module 36 judges whether the low-power battery is matched; if the low-power battery is matched, the low-power battery is electrically connected with a charging module 31, and a locking module 37 is triggered to lock the low-power battery and a normal charging is started until the charging is complete; if the low-power battery is not matched, a driving module 32 moves the low-power battery out of the charging compartment 3, and a limiting module 35 is triggered during the driving process to limit a driving stroke of the driving module 32.

In S2, after the low-power battery starts to be charged normally, the driving module of the charging compartment 3 with the full-power battery drives the full-power battery to move out of the charging compartment 3 for the user's picking, and the limiting module 35 is triggered during the driving process to limit the driving stroke of the driving module 32.

In S3, after a period of time, the detection module 33 detects whether the fully charged battery is picked by the user after being moved out of the charging compartment 3 for a period of time; if the fully charged battery is not picked, the driving module 32 moves the fully charged battery into the charging compartment 3, the limiting module 35 is triggered during the driving process to limit the driving stroke of the driving module 32, and the locking module 37 is triggered to lock the fully charged battery; if the fully charged battery is picked by the user, the controller 34 prompts that the charging compartment 3 is an empty charging compartment 3.

Specifically, when the battery needs to be replaced, firstly, the user scans the two-dimensional code on the display screen 22, the display screen transmits the signal to the main controller 21, the main controller 21 prompts the user to put the low-state battery to be replaced into the empty charging compartment 3, and the identification module 36 judges whether the low-state battery is matched, and if the low-state battery is matched, the low-state battery is electrically connected with the charging module 31 and the locking module 37 is triggered to transmit a signal to the controller 34; the controller 34 controls the locking module 37 to lock the low-power battery and prevent the low-power battery from being lost and effectively protect it, then the charging module 31 starts charging the low-power battery until the low-state battery is completely charged to be a fully-charged battery, then the charging module 31 transmits a signal to the controller 34 and the controller 34 controls the charging module 31 to disconnect from the full-power battery; if the low-state battery is not matched, the identification module 36 transmits a signal to the controller 34 and the controller 34 controls the driving module 32 to move the low-state battery out of the charging compartment 3, the limiting module 35 is triggered during the driving process to transmit a signal to the controller 34 and the controller 34 controls the driving module 32 to stop driving, the limiting module 35 plays a role in limiting the driving stroke of the driving module 32, thereby preventing the low-state battery from being excessively displaced, causing the low-state battery to fall out of the charging compartment 3 and causing damage to the low-state battery.

When the low-power battery starts to be charged normally, the controller 34 transmits a signal to the main controller 21 and the main controller 21 transmits a signal to the controller 34 of the charging compartment 3 with the full-power battery; the controller 34 controls the driving module 32 to drive the full-power battery to move out of the charging compartment 3 for the user's picking; the limiting module 35 is triggered during the driving to transmit a signal to the controller 34 and the controller 34 control the driving module 32 to stop driving, the limiting module 35 plays a role in limiting the driving stroke of the driving module 32, so as to prevent the full-power battery from being excessively displaced, causing the full-power battery to fall out of the charging compartment 3 and causing damage to the full-power battery.

After a period of time, the detection module 33 detects whether the fully charged battery is picked by the user after being moved out of the charging compartment 3 for a period of time; if the fully charged battery is not picked, the detection module 33 transmits a signal to the controller 34 and the controller 34 controls the driving module 32 to move the fully charged battery into the charging compartment 3, the limiting module 35 is triggered during the driving to transmit a signal to the controller 34 and the controller 34 control the driving module 32 to stop driving, the limiting module 35 plays a role in limiting the driving stroke of the driving module 32 so as to prevent the full-power battery from being excessively displaced, causing the full-power battery to fall out of the charging compartment 3 and causing damage to the full-power battery, and then the locking module 37 is triggered to transmit a signal to the controller 34 and the controller 34 controls the locking module 37 to lock the low-power battery and prevent the low-power battery from being lost and effectively protect it; if the fully charged battery is picked, the controller 34 transmits a signal to the main controller 21 and the main controller 21 transmits the signal to the display screen 22 so that the display screen 22 shows that the charging compartment 3 is empty.

The controller 34 transmits real-time information of each charging compartment 3 to the main controller 21, and the main controller 21 transmits the real-time information of each charging compartment 3 to the remote server 5 through the communication system 4 to realize a remote real-time monitoring; the remote server 5 transmits a control signal to the main controller 21 through the communication system 4, and the main controller 21 transmits the control signal to the controller 34, and the controller 34 transmits the control signal to the charging compartment 3 to realize a remote control.

The present disclosure and embodiments thereof are described above in an illustrative manner, which is not restrictive; and what is shown in the drawings is only one of the embodiments of the present disclosure, and its actual structure is not limited thereto. Therefore, structures and embodiments similar to the technical scheme designed by those of ordinary skills in the art inspired by this disclosure without creativity, without departing from the creative purpose of the present disclosure, are all within a protection scope of the present disclosure.

## Claims

1. A charging cabinet system, comprising a power supply system, a controlling and displaying system and a plurality of charging compartments, the power supply system being connected with the controlling and displaying system, the charging compartment being connected with both the power supply system and the controlling and displaying system, the charging compartment comprising:
a charging module for charging a low-power battery;
a driving module for moving a battery out of or into the charging compartment;
a detection module for detecting whether a fully charged battery is picked by a user after being moved out of the charging compartment for a period of time, if the fully charged battery is not picked, the driving module moving the fully charged battery into the charging compartment, and if the fully charged battery is picked, the controlling and displaying system prompting that the charging compartment is an empty charging compartment;
a controller being connected with the charging module, the driving module and the detection module, and the controller being connected with the controlling and displaying system; and
a communication module for realizing a mutual signal transmission among the controller, the charging module, the driving module, and the detection module.

2. The charging cabinet system according to claim 1, wherein the charging compartment further comprises a limiting module for limiting a driving stroke of the driving module, the limiting module being connected with the controller.

3. The charging cabinet system according to claim 1, wherein the charging compartment further comprises an identification module, the identification module being configured for identifying information about the low-power battery and judging whether the low-power battery is matched, and the identification module being connected with the controller.

4. The charging cabinet system according to claim 1, wherein the charging compartment further comprises a locking module, the locking module being configured for locking the low-power battery or locking the fully charged battery and the locking module being electrically connected with the controller.

5. The charging cabinet system according to claim 1, wherein the power system comprises a power input end, a power conversion module and a power output end, the power input end being connected with an alternating current; and
the power conversion module being connected with both the power input end and the power output end, and being configured for obtaining a specific power signal.

6. The charging cabinet system according to claim 5, wherein the power conversion module comprises a power adapter and a filter,
the power adapter being connected with the power input end and the power output end, and being configured for obtaining a power signal with a specific voltage; and
the filter, the power input end and the power output end being configured for obtaining a power signal with a specific frequency.

7. The charging cabinet system according to claim 1, wherein the controlling and displaying system comprises a main controller, a display screen and a speaker, the main controller being connected with both the display screen and the speaker, the main controller being connected with a controller of the charging compartment, and the power supply system being connected with the main controller, the display screen and the speaker.

8. The charging cabinet system according to claim 7, wherein the charging cabinet system further comprises a communication system, the communication system being connected with the main controller and configured for transmitting information of the charging cabinet to a remote server, and the communication system being a network wire or a wireless signal transceiver.

9. The charging cabinet system according to claim 1, wherein the charging cabinet also comprises a smoke detection and an alarm system, the alarm system is connected with the controller.

10. A method of managing and using the charging cabinet system according to any one of claims 1 to 9, comprising S1 to S3:
In S1, a user scans a two-dimensional code on a display screen, a main controller prompts the user to put a low-power battery into an empty charging compartment, and an identification module judges whether the low-power battery is matched; if the low-power battery is matched, the low-power battery is electrically connected with a charging module, and a locking module is triggered to lock the low-power battery and a normal charging is started until the charging is complete; if the low-power battery is not matched, a driving module moves the low-power battery out of the charging compartment, and a limiting module is triggered during the driving process to limit a driving stroke of the driving module;
In S2, after the low-power battery starts to be charged normally, the driving module of the charging compartment with the full-power battery drives the full-power battery to move out of the charging compartment for the user's picking, and the limiting module is triggered during the driving process to limit the driving stroke of the driving module; and
In S3, after a period of time, the detection module detects whether the fully charged battery is picked by the user after being moved out of the charging compartment for a period of time; if the fully charged battery is not picked, the driving module moves the fully charged battery into the charging compartment, the limiting module is triggered during the driving process to limit the driving stroke of the driving module, and the locking module is triggered to lock the fully charged battery; if the fully charged battery is picked by the user, the controller prompts that the charging compartment is an empty charging compartment.
